# EUROPÄISCHE PATENTSCHRIFT

(11) **EP 3 538 466 B1**
(45) Veröffentlichungstag und Bekanntmachung des Hinweises auf die Patenterteilung: **11.05.2022**
(21) Anmeldenummer: 17797359.1
(22) Anmeldetag: 14.11.2017
(51) Int. Cl.: B66B 5/00

(54) **FAHRKORB FÜR EIN AUFZUGSYSTEM**
ELEVATOR CAR FOR AN ELEVATOR SYSTEM
CABINE D'ASCENSEUR POUR UNE SYSTEM D'ASCENSEUR

(30) Priorität: 14.11.2016 DE 102016121742
(43) Veröffentlichungstag der Anmeldung: 18.09.2019
(73) Patentinhaber: TK Elevator Innovation and Operations GmbH, 40472 Düsseldorf (DE)
(72) Erfinder: ALTENBURGER, Stefan, 70794 Filderstadt (DE); HEMME, Andreas, 72649 Wolfschlugen (DE)
(74) Vertreter: Michalski Hüttermann & Partner Patentanwälte mbB
(86) Internationale Anmeldenummer: PCT/EP2017/079144
(87) Internationale Veröffentlichungsnummer: WO 2018/087381

(56) Entgegenhaltungen:
- EP-A1- 1 509 473
- EP-A1- 2 581 334
- CN-A- 104 310 173
- FR-A1- 2 891 820
- JP-A- H05 330 752
- JP-A- H09 110 344
- JP-A- 2011 037 586

## Beschreibung

Die vorliegende Erfindung betrifft einen Fahrkorb für ein Aufzugsystem mit einem Stützelement.

### Stand der Technik

Auf einem Fahrkorbdach eines Fahrkorbs in einem Aufzugsystem muss zumeist ein Geländer vorgesehen sein, um bei Wartungs-, Reparatur- oder Montagearbeiten die Sicherheit von Servicetechnikern und Prüfpersonal zu gewährleisten. Beispielsweise sind von den Normen EN 81-20 und EN 81-50 entsprechende Sicherheitsrichtlinien vorgegeben.

Um ein Geländer auf einem Fahrkorbdach zu befestigen, ist es zumeist notwendig, zunächst eine Befestigungskonstruktion an dem Fahrkorbdach zu montieren, z.B. anzuschrauben oder anzuflanschen, an welcher wiederum das Geländer angebracht werden kann. Eine derartige Befestigung von Geländern ist jedoch konstruktiv aufwendig und mit Montageaufwand und Materialkosten verbunden.

<Insert page 1a>

Es ist wünschenswert, eine vereinfachte Befestigung eines Geländers an einem Fahrkorb für ein Aufzugsystem zu ermöglichen.

### Offenbarung der Erfindung

Erfindungsgemäß wird ein Fahrkorb für ein Aufzugsystem mit den Merkmalen des unabhängigen Patentanspruchs 1 vorgeschlagen. Vorteilhafte Ausgestaltungen sind Gegenstand der Unteransprüche sowie der nachfolgenden Beschreibung.

Der erfindungsgemäße Fahrkorb weist wenigstens ein Stützelement auf. Ein Teilabschnitt des wenigstens einen Stützelements ragt über ein Fahrkorbdach hinaus bzw. erstreckt sich über das Fahrkorbdach hinaus. Der Teilabschnitt ist zur Befestigung eines Geländers für das Fahrkorbdach ausgebildet.

EP 1 509 473 A1 offenbart eine verbesserte Sicherheitsumzäunung, die zum Gewährleisten der Sicherheit von Servicepersonal verwendet wird, das auf der oberen Oberfläche der Deckenplatte eines Aufzugfahrkorbs arbeitet.

JP H09 110344 A offenbart eine Aufzugskabine, die die Wartung, Inspektion und Einstellung von Vorrichtungen, die innerhalb und außerhalb der Aufzugskabine vorgesehen sind, erleichtert. Bei der Wartung, Inspektion und Einstellung der um den Käfig herum installierten Geräte kann der Benutzer durch Inspektionsöffnungen ein- und aussteigen.

Das Stützelement dient zu statischen Zwecken bzw. Stabilitätszwecken. Dies bedeutet, dass das Stützelement das Fahrkorbdach trägt. Das Stützelement ist also als ein ein Fahrkorbdach tragendes Stützelement ausgebildet. Hierzu erstreckt sich das Stützelement insbesondere in vertikaler Richtung oder zumindest im Wesentlichen in vertikaler Richtung, insbesondere senkrecht zu dem Fahrkorbdach. Zweckmäßigerweise erstreckt sich das Stützelement über die gesamte Länge der Fahrkorbwand. Das Stützelement erstreckt sich also insbesondere mindestens zwischen einem Fahrkorbboden und dem Fahrkorbdach.

Beispielsweise kann das Stützelement ein Teil eines Fahrkorbrahmens darstellen. Insbesondere ist eine Vielzahl derartiger Stützelementen vorgesehen, um das Fahrkorbdach zu tragen. Zusätzlich kann die Vielzahl der Stützelemente vorgesehen sein, die einzelnen Wände des Fahrkorbs zu tragen bzw. zu stützen. Die Fahrkorbwände können zweckmäßigerweise an den Stützelementen montiert sein.

Insbesondere ist das Stützelement weiterhin als ein eine Fahrkorbwand stützendes Stützelement ausgebildet sein. Dies erleichtert die Befestigung der Fahrkorbwände, da diese einfach an dem Stützelement montiert werden können.

Bei herkömmlichen Fahrkörben schließen derartige Stützelemente insbesondere mit dem Fahrkorbdach ab und ragen nicht oder zumindest kaum über das Fahrkorbdach hinaus. Im Rahmen der Erfindung wurden erhebliche Vorteile erkannt, wenn derartige Stützelemente des Fahrkorbs über das Fahrkorbdach hinausragend verlängert und für die Befestigung eines Fahrkorbdachgeländers verwendet werden. Beispielsweise kann der Teilabschnitt zwischen 1/3 und 1/4 der Gesamtlänge des Stützelements betragen. Beispielsweise kann das Stützelement als ein Träger aus einem metallischen Werkstoff ausgebildet sein.

Das Geländer dient insbesondere zu Sicherheitszwecken für Wartungs-, Reparatur- und/oder Montagemaßahmen auf dem Fahrkorbdach. Auf herkömmliche Weise müssen oftmals zusätzliche Befestigungskonstruktionen an dem Fahrkorbdach montiert werden, um derartige Sicherheitsgeländer befestigen zu können. Beispielsweise werden derartige herkömmliche Befestigungskonstruktionen oftmals an das Fahrkorbach angeschraubt oder angeflanscht. Mit derartigen Befestigungskonstruktionen werden horizontale Handläufe verbunden. Somit sind Geländer auf herkömmliche Weise oftmals an das Fahrkorbdach angeschraubt bzw. angeflanscht, wodurch sich eine Unterbrechung des Kraftflusses ergibt und Kräfte nicht direkt auf die Fahrkorbkonstruktion übertragen werden können.

Im Gegensatz dazu ist es bei dem erfindungsgemäßen Fahrkorb nicht notwendig, eine zusätzliche Befestigungskonstruktion zu verbauen. Montageaufwand und Materialkosten können somit eingespart werden. Stattdessen wird ein bereits am Fahrkorb vorhandenes Element für die Befestigung des Geländers verwendet. Das Geländer kann somit insbesondere an einem tragenden, festen Bestandteil des Fahrkorbs befestigt werden. Somit ergibt sich eine wesentlich stabilere Anbindung des Geländers an den Fahrkorb, da Kräfte ohne Unterbrechung in die Fahrkorbstruktur eingeleitet werden.

Insbesondere erfüllt der erfindungsgemäße Fahrkorb die Sicherheitsrichtlinien gemäß den Normen EN 81-20 und EN 81-50, welche unter anderem die Sicherheit von Aufzugnutzern, Servicetechnikern und Prüfpersonal betreffen.

Der Fahrkorb ist insbesondere dazu eingerichtet, in einem entsprechenden Aufzugsystem in einem Aufzugschacht verfahren zu werden, insbesondere vertikal und/oder horizontal. Zu diesem Zweck können in dem Aufzugsystem entsprechende Elemente vorgesehen sein, z.B. ein Antrieb, Führungsschienen usw.

Vorteilhafterweise ist der Teilabschnitt des Stützelements zur Befestigung des Geländers mittels wenigstens eines lösbaren Befestigungselements ausgebildet, vorzugsweise mittels wenigstens einer Rohrschelle. Zweckmäßigerweise kann das Geländer mittels derartiger Befestigungselemente, insbesondere mittels Rohrschellen, kraftschlüssig mit dem Stützelement verbunden werden. Bei Bedarf kann der Kraftschluss zwischen Geländer und Stützelement wieder gelöst werden.

Bevorzugt ist der Teilabschnitt zu einer höhenverstellbaren Befestigung des Geländers ausgebildet. Insbesondere kann eine Höhe eines Handlaufs des Geländers über dem Fahrkorbdach verstellt werden. Somit kann die Höhe des Geländers an unterschiedliche Situationen bzw. unterschiedliche Sicherheitsanforderungen angepasst werden.

Beispielsweise können für Wartungs-, Reparatur- oder Montagearbeiten jeweils unterschiedliche Geländerhöhen vorgeschrieben sein. Zu diesem Zweck können insbesondere die lösbaren Befestigungselemente, vorzugsweise die Rohrschellen, verwendet werden. Zur Höhenverstellung werden insbesondere die Befestigungselemente gelöst, das Geländer vertikal auf die gewünschte Höhe verschoben und anschließend die Befestigungselemente wieder geschlossen.

Bei herkömmlichen Fahrkörben kann oftmals ein festes Geländer mit einer nicht veränderbaren Höhe auf dem Fahrkorbdach angebracht sein. Bei Bedarf kann an dieses feste Geländer ein zweites Geländer als Verlängerung montiert werden, was mit erheblichem Aufwand verbunden ist. Im Gegensatz dazu kann mittels der Erfindung die Höhe des Geländers flexibel ohne konstruktiven Aufwand variiert werden.

Vorzugsweise ist der Teilabschnitt derart zu der höhenverstellbaren Befestigung des Geländers ausgebildet, dass die Höhe des Handlaufs des Geländers über dem Fahrkorbdach zwischen 500 mm und 1500 mm, insbesondere zwischen 600 mm und 1200mm, bevorzugt zwischen 700mm und 1100mm verstellbar ist. Beispielsweise kann die Höhe von 700 mm für Inspektionsarbeiten auf dem Fahrkorbdach vorgesehen sein, die Höhe von 1100 mm für Montagearbeiten.

Bevorzugt ist das wenigstens eine Stützelement als wenigstens ein Eckstützelement ausgebildet, das insbesondere zwei senkrecht oder zumindest im Wesentlichen senkrecht aufeinander stehende Fahrkorbwände stützt.

Zweckmäßigerweise ist das Eckstützelement an einer Seitenkante angeordnet, an welcher zwei benachbarte Fahrkorbwände aneinander grenzen, beispielsweise eine Vorder- oder Rückwand des Fahrkorbs und eine Seitenwand. Derartige Eckstützelemente dienen zweckmäßigerweise dazu, die Stabilität des Fahrkorbs zu erhöhen, das Fahrkorbdach zu tragen und die Fahrkorbwände zu tragen.

Gemäß einer besonders bevorzugten Ausgestaltung weist der Fahrkorb ein erstes Stützelement und ein zweites Stützelement auf. Der Teilabschnitt des ersten Stützelements ist zur Befestigung eines ersten Endbereichs des Geländers ausgebildet. Der Teilabschnitt des zweiten Stützelements ist zur Befestigung eines zweiten Endbereichs des Geländers ausgebildet. Die beiden Endbereiche des Geländers sind zweckmäßigerweise als Endbereiche eines Handlaufrohrs ausgebildet, welches entsprechend gebogen bzw. geformt ist, um an den Stützelementen befestigt zu werden.

Vorzugsweise sind die Endbereiche des Geländers mit den Rohrschellen an den Stützelementen befestigt.

Vorteilhafterweise ist das erste Stützelement als ein erstes Eckstützelement ausgebildet und das zweite Stützelement als ein zweites Eckstützelement. Zweckmäßigerweise sind diese beiden Eckstützelemente an den beiden gegenüberliegenden Seiten derselben Fahrkorbwand angeordnet. Insbesondere sind die beiden Eckstützelemente dazu vorgesehen, eine Fahrkorbwand mit ihren beiden benachbarten Fahrkorbwänden zu verbinden.

Vorteilhafterweise ist der Teilabschnitt des wenigstens einen Stützelements zur Befestigung eines als ein Handlaufrohr mit zwei gebogenen Endbereichen ausgebildeten Geländers ausgebildet. Der Bereich des Handlaufrohrs zwischen diesen beiden Endbereichen stellt zweckmäßigerweise den Handlauf des Geländers dar. Die beiden Endbereiche sind jeweils vorzugsweise senkrecht oder zumindest im Wesentlichen senkrecht zu dem restlichen Teil des Handlaufrohrs gebogen und verlaufen parallel zueinander. Analog zu obiger Erläuterung ist ein erster Endbereich des Handlaufrohrs vorzugsweise zur Befestigung an dem erstem Stützelement ausgebildet und ein zweiter Endbereich zur Befestigung an dem zweiten Stützelement.

Durch diese bevorzugte Ausgestaltung des Geländers und die Verwendung lösbarer Befestigungselemente kann eine besonders einfach Höhenverstellung des Handlaufs ermöglicht werden, insbesondere durch die spezielle Position der Befestigungselemente an den Stützelementen sowie die spezielle Länge der Endbereiche. Insbesondere sind die Endbereiche

derart ausgestaltet, dass wenn jeweils der Endpunkt der Endbereiche und somit die Endpunkte des Handlaufrohrs direkt auf dem Fahrkorb aufliegen, eine vorgegebene minimale Höhe des Handlaufs eingestellt ist, z.B. 700 mm. Wenn jeweils die Endpunkte der Endbereiche bzw. die Endpunkte des Handlaufrohrs gerade noch mit den lösbaren Befestigungselementen an den Stützelementen befestigt werden können, ist insbesondere eine maximale Höhe des Handlaufs eingestellt, z.B. 1100 mm.

Das Handlaufrohr kann eine zweckmäßige Form aufweisen, beispielsweise kann es stellenweise verdickt oder mit Abweisern versehen sein, z.B. um ein Quetschen zwischen dem Handlaufrohr und einer Störkontur in einem entsprechenden Aufzugschacht zu vermeiden. Die Form des Handlaufrohrs kann insbesondere derart gewählt werden, dass ein möglichst großer Arbeitsbereich auf dem Fahrkorbdach ermöglicht wird und gleichzeitig vorgegebene Schutzabstände gewährleistet werden.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

### Figurenbeschreibung

- Figur 1: zeigt schematisch eine bevorzugte Ausgestaltung eines erfindungsgemäßen Fahrkorbs in einer perspektivischen Ansicht.
- Figur 2: zeigt schematisch ein Geländer für eine bevorzugte Ausgestaltung eines erfindungsgemäßen Fahrkorbs.
- Figur 3: zeigt schematisch eine bevorzugte Ausgestaltung eines erfindungsgemäßen Fahrkorbs in Seitenansichten.
- Figur 4: zeigt schematisch bevorzugte Ausgestaltungen eines erfindungsgemäßen Fahrkorbs jeweils in einer Draufsicht.

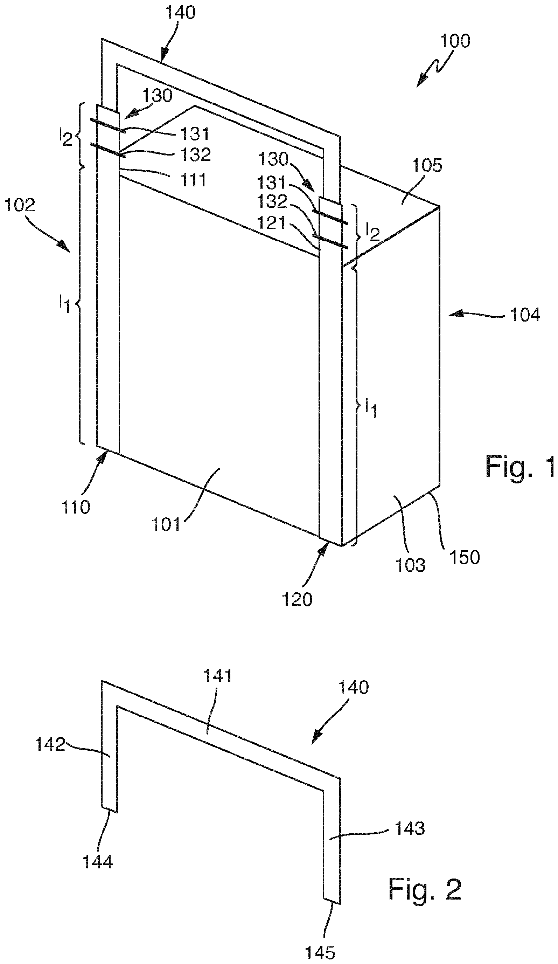

In Figur 1 ist eine bevorzugte Ausgestaltung eines erfindungsgemäßen Fahrkorbs schematisch in einer perspektivischen Ansicht dargestellt und mit 100 bezeichnet.

Der Fahrkorb 100 weist eine Rückwand 101, eine linke Seitenwand 102, eine rechte Seitenwand 103, eine Frontwand 104 sowie ein Fahrkorbdach 105 auf. Die in Figur 1 nicht dargestellte Frontwand 104 des Fahrkorbs weist eine Fahrkorbtür auf.

Der Fahrkorb 100 ist zur Verwendung in einem Aufzugsystem vorgesehen und kann dabei in einem Aufzugschacht z.B. vertikal verfahren werden. Es versteht sich, dass der Fahrkorb 100 noch weitere Elemente aufweisen kann, welche der Übersichtlichkeit halber in Figur 1 nicht dargestellt sind. beispielsweise Führungsrollen, eine Befestigung für ein Tragseil usw.

Zum Stützen bzw. Tragen des Fahrkorbdaches 105 sind Stützelemente 110, 120 vorgesehen, welche als Eckstützelemente ausgebildet sind. Die Stützelemente 110 und 120 erstrecken sich mindestens zwischen dem Fahrkorbboden 150 und dem Fahrkorbdach 105.

Weiterhin sind die Stützelemente 110, 120 zum Stützen bzw. Tragen der Fahrkorbwände 101, 102, 103 und 104 vorgesehen. Die Rückwand 101 ist an ihrem linken Rand an einem ersten Stützelement 110 angeordnet. Ebenso ist die linke Seitenwand 102 an diesem ersten Stützelement 110 angeordnet. Analog ist die Rückwand 101 an ihrem rechten Rand an einem zweiten Stützelement 120 angeordnet, an welchem ebenfalls die rechte Seitenwand 103 angeordnet ist. Beispielsweise sind die Stützelemente 110 und 120 jeweils als Metallträger ausgebildet und dienen zur Stabilität des Fahrkorbs.

Je ein Teilabschnitt 111, 121 der Stützelemente 110 bzw. 120 ragt über das Fahrkorbdach 105 hinaus. Wie in Figur 1 dargestellt ist, können sich die Stützelemente 110 und 120 über die gesamte Länge l₁ der Rückwand 101 erstrecken und über eine Länge l₂ über das Fahrkorbdach 105 hinaus ragen. Beispielsweise kann die Länge l₁ 2,3 m betragen und Länge l₂ 0,7 m.

Die Teilabschnitte 111 und 121 sind jeweils zur Befestigung eines Geländers 140 für das Fahrkorbdach 105 ausgebildet. Das Geländer 140 kann mittels lösbarer Befestigungselemente, beispielsweise Rohrschellen 130, an den Teilabschnitten 111 und 121 der Stützelemente 110 und 120 befestigt werden. Dabei ist an jedem Stützelemente 110 und 102 jeweils eine obere Rohrschelle 131 und eine untere Rohrschelle 132 vorgesehen.

Eine bevorzugte Ausgestaltung eines derartigen erfindungsgemäßen Geländers 140 ist schematisch in Figur 2 dargestellt.

Das Geländer 140 ist als ein gebogenes Handlaufrohr ausgebildet. Die beiden Endbereiche 142 und 143 dieses Handlaufrohrs sind dabei in Relation zu dem dazwischen liegenden Bereich 141 um 90° gebogen. Der Bereich 141 bildet den Handlauf des Geländers.

Die Endpunkte der Endbereiche 142 bzw. 143 und somit die Enden des Geländers 140 sind in Figur 2 jeweils mit 144 bzw. 145 bezeichnet.

Der Endbereich 142 des Geländers 140 kann über Rohrschellen 130 an dem ersten Stützelement 110 befestigt werden, der Endbereich 143 des Geländers 140 über Rohrschellen 130 an dem zweiten Stützelement 120.

Die Rohrschellen 132 können beispielsweise kreis- oder ellipsenförmig ausgebildet sein, wie in Figur 1 angedeutet, und können den jeweiligen Teilabschnitt 111 bzw. 121 und den jeweiligen Endbereiche 142 bzw. 143 jeweils umschließen. Die Erfindung soll jedoch nicht auf derartige Rohrschellen beschränkt sein. Beispielsweise können die Rohrschellen die Teilabschnitte und Endbereiche beispielsweise auch nur teilweise umschließen und können z.B. U-förmig ausgebildet sein. Derartige U-förmige Rohrschellen können beispielsweise mit ihren parallelen Schenkeln an dem jeweiligen Teilabschnitt 111 bzw. 121 angeschraubt werden.

Das Geländer 140 kann höhenverstellbar an dem Fahrkorb 100 angebracht werden, so dass eine Höhe des Handlaufs 141 über dem Fahrkorbdach 105 flexibel eingestellt werden kann. Die Rohrschellen 130 können zu diesem Zweck gelöst werden, das Geländer 140 kann vertikal auf eine gewünschte Höhe verschoben werden und die Rohrschellen 130 können wieder geschlossen werden.

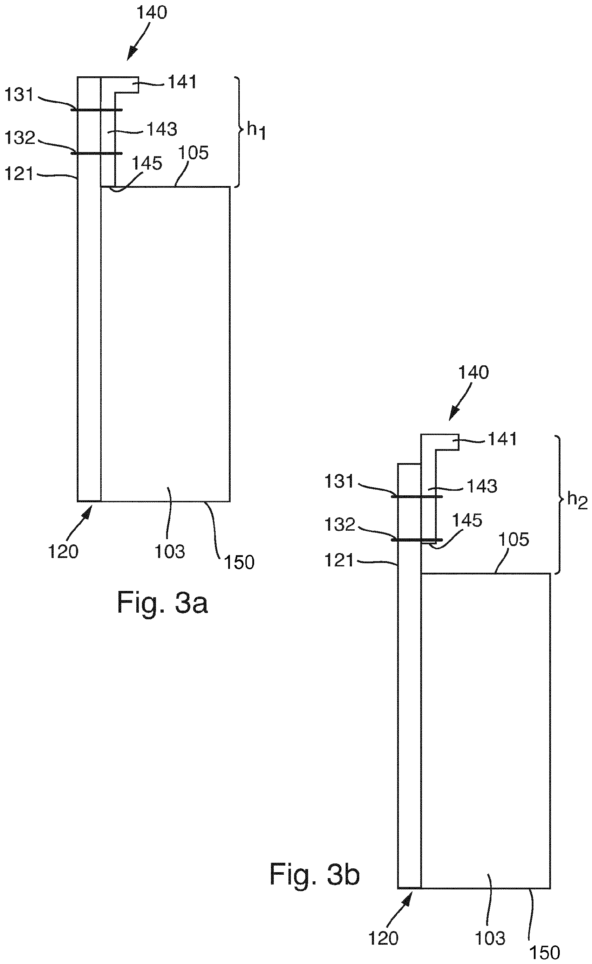

Durch die spezielle Position der Rohrschellen 130 an den Stützelementen 110 und 120 sowie die spezielle Länge der Endbereiche 142 und 143 kann eine besonders einfach Höhenverstellung des Handlaufs 141 ermöglicht werden, wie nachfolgend in Bezug auf Figur 3 erläutert wird.

In Figur 3a und 3b ist jeweils der Fahrkorb 100 aus Figur 1 schematisch in einer Seitenansicht dargestellt. Identische Bezugszeichen in den unterschiedlichen Figuren bezeichnen dabei gleiche oder baugleiche Elemente.

In Figur 3a ist der Fall dargestellt, dass eine minimale Höhe h₁ des Handlaufs 141 von beispielsweise 700 mm eingestellt ist. Diese Höhe ergibt sich automatisch, wenn die Endpunkte 144 und 145 direkt auf dem Fahrkorbdach 105 aufliegen.

In Figur 3b ist der Fall dargestellt, dass die Enden 144 und 145 gerade noch mit den unteren Rohrschellen 132 an den Stützelementen 110 und 120 befestigt werden können. In diesem Fall ergibt sich eine maximale Höhe h₂ des Handlaufs 141 von beispielsweise 1100 mm.

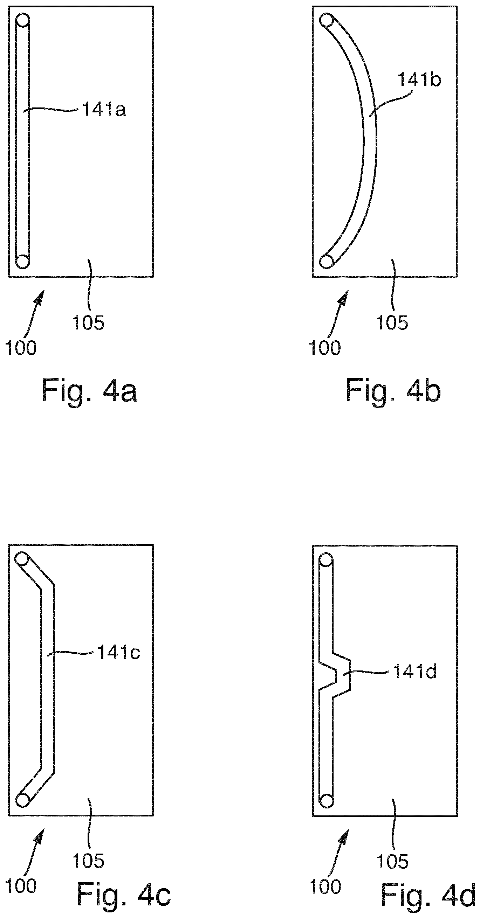

Das Geländer 140, insbesondere der Handlauf 141, kann eine zweckmäßige Form aufweisen. In Figur 4 sind verschiedene Ausgestaltungen des Handlaufs 141 dargestellt. Dabei ist in den Figuren 4a bis 4d jeweils eine Draufsicht auf den Fahrkorb 100 gemäß den Figuren 1 und 3dargestellt.

In Figur 4a ist eine erste bevorzugte Ausgestaltung des Handlaufs 141a dargestellt, welche parallel zu einem Rand des Fahrkorbdachs 105 verläuft.

Eine zweite bevorzugte Ausgestaltung des Handlaufs 141b mit einer halbelliptischen Form ist in Figur 4b dargestellt.

Gemäß einer weiteren bevorzugten Ausgestaltung weist der in Figur 4c dargestellte Handlauf 141c einen ersten Bereich auf, welcher parallel zu dem Rand des Fahrkorbdachs 105 verläuft, und zwei im Vergleich zu diesem Bereich abgewinkelte Bereiche.

Die in Figur 4d dargestellte bevorzugte Ausgestaltung des Handlaufs 141d weist in der Mitte einen Trapezbereich auf und verläuft ansonsten parallel zu dem Rand des Fahrkorbdachs 105.

### Bezugszeichenliste

- 100: Fahrkorb
- 101: Rückwand
- 102: linke Seitenwand
- 103: rechte Seitenwand
- 104: Frontwand
- 105: Fahrkorbdach
- 110: erstes Stützelement
- 111: Teilabschnitt des ersten Stützelements
- 120: zweites Stützelement
- 121: Teilabschnitt des zweiten Stützelements
- 130: Rohrschellen
- 131: obere Rohrschellen
- 132: untere Rohrschellen
- 140: Geländer
- 141: Handlauf
- 141a: Handlauf
- 141b: Handlauf
- 141c: Handlauf
- 141d: Handlauf
- 142: erster Endbereich des Geländers
- 143: zweiter Endbereich des Geländers
- 144: Ende des ersten Endbereich des Geländers
- 145: Ende des zweiten Endbereich des Geländers
- 150: Fahrkorbboden

- l₁: Länge der Rückwand
- l₂: Länge der Teilabschnitte der Stützelemente
- h₁: minimale Höhe des Handlaufs über dem Fahrkorbdach
- h₂: maximale Höhe des Handlaufs über dem Fahrkorbdach

## Patentansprüche

1. Fahrkorb (100) für ein Aufzugsystem mit wenigstens einem Stützelement (110, 120), wobei ein Teilabschnitt (111, 121) des wenigstens einen Stützelements (110, 120) über ein Fahrkorbdach (105) hinaus ragt und wobei der Teilabschnitt (111, 121) zur Befestigung eines Geländers (140) für das Fahrkorbdach (105) ausgebildet ist, **dadurch gekennzeichnet, dass** das wenigstens eine Stützelement (110, 120) als ein das Fahrkorbdach (105) tragendes Stützelement (110, 120) ausgebildet ist, wobei sich das wenigstens eine Stützelement (110, 120) insbesondere mindestens zwischen einem Fahrkorbboden (150) und dem Fahrkorbdach (105) erstreckt.

2. Fahrkorb (100) nach Anspruch 1, wobei der Teilabschnitt (111, 121) zur Befestigung des Geländers (140) mittels wenigstens eines lösbaren Befestigungselements (130, 131, 132) ausgebildet ist.

3. Fahrkorb (100) nach Anspruch 2, wobei der Teilabschnitt (110, 120) zur Befestigung des Geländers (140) mittels wenigstens einer Rohrschelle (130, 131, 132) ausgebildet ist.

4. Fahrkorb (100) nach einem der vorstehenden Ansprüche, wobei der Teilabschnitt (111, 121) zu einer höhenverstellbaren Befestigung des Geländers (140) ausgebildet ist.

5. Fahrkorb (100) nach Anspruch 4, wobei der Teilabschnitt (111, 121) derart zu der höhenverstellbaren Befestigung des Geländers (140) ausgebildet ist, dass eine Höhe (hi, h₂) eines Handlaufs (141) des Geländers über dem Fahrkorbdach (105) zwischen 500 mm und 1500 mm, insbesondere zwischen 600 mm und 1200 mm, insbesondere zwischen 700 mm und 1100 mm verstellbar ist.

6. Fahrkorb (100) nach einem der vorstehenden Ansprüche, wobei das wenigstens eine Stützelement (110, 120) als wenigstens ein Eckstützelement ausgebildet ist, das insbesondere zwei senkrecht oder zumindest im Wesentlichen senkrecht aufeinander stehende Fahrkorbwände (101, 101, 103) stützt.

7. Fahrkorb (100) nach einem der vorstehenden Ansprüche mit einem ersten Stützelement (110) und mit einem zweiten Stützelement (120), wobei der Teilabschnitt (111) des ersten Stützelements (110) zur Befestigung eines ersten Endbereichs (142) des Geländers (140) für das Fahrkorbdach (105) ausgebildet ist und wobei der Teilabschnitt (120) des zweiten Stützelements (120) zur Befestigung eines zweiten Endbereichs (143) des Geländers (140) für das Fahrkorbdach (105) ausgebildet ist.

8. Fahrkorb (100) nach Anspruch 6 und 7, wobei das erste Stützelement (110) als ein erstes Eckstützelement ausgebildet ist und wobei das zweite Stützelement (120) als ein zweites Eckstützelement ausgebildet ist.

9. Fahrkorb (100) nach einem der vorstehenden Ansprüche, wobei der Teilabschnitt (111, 121) des wenigstens einen Stützelements (110, 120) zur Befestigung eines als ein Handlaufrohr mit zwei gebogenen Endbereichen (142, 143) ausgebildeten Geländers (140) ausgebildet ist.

## Claims

1. Elevator car (100) for an elevator system comprising at least one support element (110, 120), wherein a partial section (111, 121) of the at least one support element (110, 120) projects beyond an elevator car roof (105), and wherein the partial section (111, 121) is configured for mounting a railing (140) for the elevator car roof (105),
**characterized in that**
the at least one support element (110, 120) is configured as a bearing support element (110, 120) supporting the elevator car roof (105), wherein the at least one support element (110, 120) extends in particular at least between an elevator car floor (150) and the elevator car roof (105).

2. Elevator car (100) according to claim 1, wherein the partial section (111, 121) for mounting the railing (140) is formed by means of at least one releasable mounting element (130, 131, 132).

3. Elevator car (100) according to claim 2, wherein the partial section (110, 120) is formed for mounting the railing (140) by means of at least one pipe clamp (130, 131, 132).

4. Elevator car (100) according to any one of the preceding claims, wherein the partial section (111, 121) is configured for a height-adjustable mounting of the railing (140).

5. Elevator car (100) according to claim 4, wherein the partial section (111, 121) is configured for the height-adjustable mounting of the railing (140) in such a way that a height (hi, h₂) of a handrail (141) of the railing can be adjusted between 500 mm and 1500 mm, in particular between 600 mm and 1200 mm, in particular between 700 mm and 1100 mm, above the car roof (105).

6. Elevator car (100) according to any one of the preceding claims, wherein the at least one support element (110, 120) is configured as at least one corner support element, which in particular supports two elevator car walls (101, 101, 103) that are perpendicular or at least substantially perpendicular to one another.

7. Elevator car (100) according to any one of the preceding claims, comprising a first support element (110) and a second support element (120), wherein the partial section (111) of the first support element (110) is configured for mounting a first end region (142) of the railing (140) for the elevator car roof (105), and wherein the partial section (120) of the second support element (120) is configured for mounting a second end region (143) of the railing (140) for the elevator car roof (105).

8. Elevator car (100) according to claim 6 and 7, wherein the first support element (110) is configured as a first corner support element, and wherein the second support element (120) is configured as a second corner support element.

9. Elevator car (100) according to any one of the preceding claims, wherein the partial section (111, 121) of the at least one support element (110, 120) is configured for mounting a railing (140) formed as a handrail tube with two bent end regions (142, 143).

## Revendications

1. Cabine d'ascenseur (100) pour un système d'ascenseur avec au moins un élément de support (110, 120), une section partielle (111, 121) du au moins un élément de support (110, 120) dépassant d'un toit de cabine (105) et la section partielle (111, 121) étant conçue pour la fixation d'un garde-corps (140) pour le toit de cabine (105), **caractérisée en ce que** ledit au moins un élément de support (110, 120) est réalisé en tant qu'élément de support (110, 120) portant le toit de cabine (105), le au moins un élément de support (110, 120) s'étendant en particulier au moins entre un plancher de cabine (150) et le toit de cabine (105).

2. Cabine d'ascenseur (100) selon la revendication 1, la section partielle (111, 121) étant conçue pour fixer le garde-corps (140) au moyen d'au moins un élément de fixation amovible (130, 131, 132).

3. Cabine d'ascenseur (100) selon la revendication 2, la section partielle (110, 120) étant conçue pour fixer le garde-corps (140) au moyen d'au moins un collier de serrage (130, 131, 132).

4. Cabine d'ascenseur (100) selon l'une des revendications précédentes, la section partielle (111, 121) étant conçue pour une fixation réglable en hauteur du garde-corps (140).

5. Cabine d'ascenseur (100) selon la revendication 4, la section partielle (111, 121) étant conçue pour la fixation réglable en hauteur du garde-corps (140) de telle sorte qu'une hauteur (h₁, h₂) d'une main courante (141) du garde-corps au-dessus du toit de cabine (105) est réglable entre 500 mm et 1500 mm, en particulier entre 600 mm et 1200 mm, en particulier entre 700 mm et 1100 mm.

6. Cabine d'ascenseur (100) selon l'une des revendications précédentes, ledit au moins un élément de support (110, 120) étant réalisé en tant que au moins un élément de support d'angle qui soutient en particulier deux parois de cabine (101, 101, 103) perpendiculaires ou au moins sensiblement perpendiculaires l'une par rapport à l'autre.

7. Cabine d'ascenseur (100) selon l'une des revendications précédentes avec un premier élément de support (110) et avec un deuxième élément de support (120), la section partielle (111) du premier élément de support (110) étant conçue pour fixer une première zone d'extrémité (142) du garde-corps (140) pour le toit de cabine (105) et la section partielle (120) du deuxième élément de support (120) étant conçue pour fixer une deuxième zone d'extrémité (143) du garde-corps (140) pour le toit de cabine (105).

8. Cabine d'ascenseur (100) selon les revendications 6 et 7, le premier élément de support (110) étant réalisé en tant que premier élément de support d'angle et le deuxième élément de support (120) étant réalisé en tant que deuxième élément de support d'angle.

9. Cabine d'ascenseur (100) selon l'une des revendications précédentes, la section partielle (111, 121) du au moins un élément de support (110, 120) étant conçue pour la fixation d'un garde-corps (140) réalisé sous forme d'un tube de main courante avec deux zones d'extrémité (142, 143) courbées.
